# EUROPEAN PATENT APPLICATION

(11) **EP 4 556 453 A1**
(43) Date of publication of application: **21.05.2025**
(21) Application number: 22950982.3
(22) Date of filing: 12.07.2022
(51) Int. Cl.: C05G 5/12, B01J 2/14, C05D 1/04, C05D 3/00, C05D 5/00, C05D 9/00

(54) **METHOD FOR THE WET GRANULATION OF POLYSULPHATES**

(71) Applicant: Fertisac, S.L., 18320 Atarfe, Granada (ES)
(72) Inventor: RODRÍGUEZ RUBIO, Enrique, 33401 AVILES- ASTURIAS (ES); MONTERO ZAMORA, Cristina, 18125 VENTAS DE ZAFARRAYA - GRANADA (ES)
(74) Representative: Del Valle Valiente, Sonia
(86) International application number: PCT/ES2022/070446
(87) International publication number: WO 2024/013404

(57) **Abstract**

The invention relates to a method for the wet granulation of polyhalite mineral polysulphates, comprising the spraying of a multi-saturated solution of a portion of said poly sulphates over milled poly sulphates. The invention also relates to the poly sulphate granule obtained using said method.

## Description

### OBJECT OF THE INVENTION

The invention relates to a method for the wet granulation of polyhalite mineral polysulphates, comprising the spraying of a multi-saturated solution of a portion of said poly sulphates over milled poly sulphates. The invention also relates to the poly sulphate granule obtained using said method.

### BACKGROUND OF THE INVENTION

Currently, granular fertilisers are the most widely used fertilisers compared to those in powder or crystalline form, due to a better application both in terms of uniformity and convenience.

Polysulphate is a mineral product (geologically formed in polyhalite layers), very suitable for fertilisation due to its supply of macronutrients such as potassium (K), calcium (Ca), magnesium (Mg) and sulphur (S) and low chlorine content.

Among the methods of granulation disclosed in the state of the art, the wet granulation method is considered. The wet granulation method consists of the formation of grains with the granulometry desired by the manufacturer (normally between 2 and 5 mm) and which is at least 92 %. This is done by mixing the solid raw material with a liquid medium the function of which is based on its potential to provide crystalline bridges between the particles forming the grain. However, when it comes to granulating poorly soluble products, the formation of these crystalline bridges is very limited and, either the grains cannot be formed or are extremely weak.

One of the main problems of polysulphate in wet granulation, is due to the fact that the overall specific solubility is so small (<1 % in water) that the fluid medium does not have sufficient potential for the formation of crystalline bridges that are sufficiently stable.

The state of the art has disclosed the use of binders, such as starches, lignosulphates, gums, etc., however, the use of said binders adds products other than polysulphate itself with little or no agronomic function.

Document ES2873118T3 discloses a method for forming a granulated evaporite mineral product, comprising a liquid and at least 50 % by mass of an evaporite mineral powder, in this case polyhalite. In our view, this invention has the following drawbacks, it requires careful moisture control of the polyhalite powder for further processing, the addition of a thickener (such as pre-gelatinised corn starch), starches from other sources, lignosulphate, sodium silicate, etc.) and two steps of mixing said thickener with the polyhalite powder prior to the granulation process.

Therefore, it would be desirable to have a method for the wet granulation of polysulphates that does not require mixing steps prior to granulation nor the addition of binders foreign to the product itself and of little or no agronomic value.

### DESCRIPTION OF THE INVENTION

Thus, the present invention relates to a method for the wet granulation of polysulphates with high chemical and physical quality without the need to add foreign binders with little or no agronomic function, without prior mixing steps.

In a first aspect, the present invention concerns a method for the wet granulation of polysulphate from mineral polyhalites, comprising the following steps:
i) milling some of the polysulphate to a particle size less than or equal to about 600 microns;
ii) dissolving another part of the polysulphate in water to obtain a multi-saturated solution of the soluble salts present in the polysulphate, under stirring and at a temperature of between 0°C and 100°C;
iii) filtering the multi-saturated solution obtained in step (ii) to separate the undissolved salts;
iv) spraying the filtered multi-saturated solution from step (iii) over the milled polysulphate from step (i) in a granulator dish to obtain wet polysulphate grains; and
v) drying the granular material obtained in step (iv).

By means of the milling of step (i), the best specific surface area of the polyhalite is achieved having a high reactivity and capillary potential.

In another embodiment, the invention relates to the previously defined method, wherein the saturated solution of step (ii) is carried out by stirring for the time required for maximum dissolution of the soluble salts present in the polysulphate, and preferably for at least 1 hour.

In another embodiment the invention relates to the method defined above wherein the temperature of step (ii) is selected from between 20 °C and 60 °C, preferably from between 25°C and 35°C.

Filtration of the solution described in step (iii) of the method is carried out to separate the insoluble salts that have remained undissolved, which will be mainly part of the calcium sulphate, as well as other inert materials that may be contained in the original polysulphate. So in this step (iii) the insoluble fraction is discarded and the filtrate consisting of a multi-saturated solution in magnesium sulphate, calcium sulphate and potassium sulphate is preserved. This solution is the appropriate fluid medium to form crystalline bridges between the particles of the granular product in the subsequent drying step.

In another embodiment, the invention relates to the previously defined method, wherein the filtering of step (iii) is carried out under gravity or vacuum.

A set of wet polysulphate grains of different sizes is obtained in step (iv), which overcome the funicular state and reach mostly a capillary state in which their components are bound together by weak adhesion and capillary forces.

In another embodiment, the invention relates to the previously defined method, wherein the spraying of step (iv) is carried out with a spray nozzle, and preferably wherein the spraying of step (iv) is carried out with a full cone spray nozzle.

By means of step (v) of the method, the solution soaking said grains is supersaturated and the salts present are precipitated, forming strong crystalline bridges that join the polysulphate particles, generating a grain with sufficient hardness.

In another embodiment, the invention relates to the previously defined method, wherein the temperature of step (v) is gradually increased, and preferably wherein the temperature is gradually increased up to a temperature of 100 °C.

In another embodiment, the invention relates to the previously defined method, wherein the moisture content of the product obtained in step (v) is between 0,5 % and 2 %.

In another embodiment, the invention relates to the previously defined method, further comprising a step (vi) of sieving the grains obtained in the drying step (v) to separate the grain fraction, preferably to separate the grain fraction with a diameter between 2 mm and 5 mm, and more preferably to separate the grain fraction with a diameter of 4 mm.

In another embodiment, the invention relates to the previously defined method, further comprising a step (vii) for recycling those grains having a diameter smaller or larger than those sieved in step (vi).

In step (vil) the grains having a diameter of less than 2 mm are recycled by feeding them directly into step (iv) of the process, while grains having a diameter of more than 4 mm are ground before being reintroduced into step (iv).

Another aspect of the invention relates to a polysulphate granule obtained by means of the method defined above, and preferably wherein the granule has a diameter of between 2 mm and 5 mm, and more preferably 4 mm.

The term "polysulphate" relates to a product geologically formed in mineral polyhalite layers comprising the sulphate anion (SO₄ ²⁻) and the cations (Ca²⁺), Mg²⁺ and K⁺) forming a single triclinic crystal structure of the pinacoidal class. By composition, polysulphate is a very suitable product for fertilisation due to its supply of macronutrients such as potassium (K), calcium (Ca), magnesium (Mg) and sulphur (S) and its low chlorine content.

The term "multi-saturated solution" relates to a solution saturated in the various water-soluble salts present in the polysulphate referred to in the invention, without the precipitation thereof.

Throughout the description and the claims, the word "comprises" and its variants do not intend to exclude other technical features, additives, components or steps. For those skilled in the art, other objects, advantages and features of the invention may be partially deduced from both the description and the embodiment of the invention. The following examples are provided by way of illustration and are not intended to limit the present invention.

### EXAMPLES

Next, the invention will be illustrated by means of the assays carried out by the inventors that demonstrate the effectiveness of the product of the invention.

### Method for the wet granulation of mineral polyhalite polysulphates

200 g of mineral polyhalite is prepared in advance by means of a milling process so that the final granulometry is less than about 600 microns.

Moreover, a multi-saturated solution is prepared in water from the salts contained in the mineral polyhalite, in other words, potassium sulphate, magnesium sulphate and calcium sulphate. To do so, 50 g of polysulphate is mixed with 50 g of water. This mixture is stirred for at least 1 hour and filtered.

The filtered liquid contains potassium sulphate, magnesium sulphate and calcium sulphate with concentrations corresponding to their relative solubilities.

The milled polyhalite is fed into a 30 cm diameter Pilot Granulator Dish inclined at 45° with respect to the horizontal plane. The rotational speed of the dish is adjusted until the granulometric classification generated on the dish is such that the fine grains are spread over the maximum surface of the dish without touching its limits.

The previously obtained multi-saturated solution is slowly sprayed over the product. The final amount of solution to be sprayed depends on the desired average grain size, 14 % was used in this example.

The grains thus obtained are dried in an air stream at 100 °C for about 30 minutes.

The dry grains are sieved to separate the fraction between 2 and 5 mm, which is considered as a final product. Fractions greater than 5 mm and less than 2 mm, are considered as a recyclate that can be milled separately or together with the raw mineral polyhalite to produce the granular product continuously or in successive batch processes.

### Physico-chemical properties of the product obtained

### Chemical composition

▪ 49.0 % water-soluble SO₃
▪ 14.1 % water-soluble K₂O
▪ 6.4 % water-soluble MgO
▪ 17.0 % water-soluble CaO

### Physical properties

| | | | |
|---|---|---|---|
| ▪ | Granulometry | | |
| | • >5 mm | 0% | |
| | • 4-5 mm | 5 % | |
| | • 4-3 mm | 37 % | |
| | • 3-2 mm | 53 % | |
| | • 2-1 mm | 5 % | |
| | • <1 mm | 0% | |
| ▪ | Apparent density | | 1167 kg/m3 |
| ▪ | Hardness | | 12 N |
| ▪ | pH | | Neutral |
| ▪ | Humidity | | < 1 % |

## Claims

1. A method for the wet granulation of polysulphate from mineral polyhalites, comprising the following steps:
i) milling some of the polysulphate to a particle size less than or equal to about 600 microns;
ii) dissolving another part of the polysulphate in water to obtain a multi-saturated solution of the soluble salts present in the polysulphate, under stirring and at a temperature of between 0°C and 100°C;
iii) filtering the multi-saturated solution obtained in step (ii) to separate the undissolved salts;
iv) spraying the filtered multi-saturated solution from step (iii) over the milled polysulphate from step (i) in a granulator dish to obtain wet polysulphate grains; and
v) drying the granular material obtained in step (iv).

2. The method according to claim 1, wherein the saturated solution of step (ii) is carried out by stirring for the time required for maximum dissolution of the soluble salts present in the polysulphate.

3. The method according to any of claims 1 or 2, wherein the temperature of step (ii) is selected from 20 °C to 60 °C.

4. The method according to any of claims 1 to 3, wherein the filtering of step (iii) is carried out under gravity or vacuum.

5. The method according to any of claims 1 to 4, wherein the spraying of step (iv) is carried out with a spray nozzle.

6. The method according to any of claims 1 to 5, wherein the temperature of step (v) is gradually increased.

7. The method according to claim 6, wherein the temperature of step (v) is gradually increased to a temperature of 100 °C.

8. The method according to any of claims 1 to 7, wherein the moisture content of the product obtained in step (v) is between 0,5 % and 2 %.

9. The method according to any of claims 1 to 8, further comprising a step (vi) of sieving the grains obtained in the drying step (v) to separate the grain fraction.

10. The method according to claim 9, wherein in the sieving step (vi) the grain fraction with a diameter between 2 mm and 5 mm is separated.

11. The method according to any of claims 1 to 10, further comprising a step (vii) for recycling those grains having a diameter smaller or larger than those sieved in step (vi).

12. A polysulphate granule obtained by means of the method defined in any of claims 1 to 11.

13. The polysulphate granule according to claim 12, wherein the granule has a diameter of between 2 mm and 5 mm.
